# EUROPEAN PATENT APPLICATION

(11) **EP 3 188 141 A1**
(43) Date of publication of application: **05.07.2017**
(21) Application number: 16207646.7
(22) Date of filing: 30.12.2016
(51) Int. Cl.: G07F 17/00, G06Q 30/06, B60L 11/18

(54) **PUBLIC ELECTRIC BIKE SHARING SYSTEM PROVIDED WITH AN AUTOMATIC ELECTRONIC SYSTEM FOR REMOTELY MANAGING THE ELECTRIC SUPPLY FOR THE BIKES AND RELATIVE OPERATING METHOD**

(30) Priority: 30.12.2015 IT UB20159774
(71) Applicant: Clear Channel Jolly Pubblicita' S.p.A., 00198 Roma (IT)
(72) Inventor: VERRECCHIA, Sergio, 35010 Limena (IT)
(74) Representative: Zamprogno, Bruno

(57) **Abstract**

Bike sharing system (1) provided with an electronic system (22) monitoring the power supply state of the bikes (2) comprising: electronic control devices (24) that are installed in the bikes (2) and are configured for transmitting a power supply state signal comprising a bike identification code, the position of the bike (2) and a parameter indicating the electric charge level of the battery (17) installed in the bike (2) for supplying the motor (16). The monitoring electronic system (22) further comprises an electronic remote control station (15) configured for receiving the power supply state signal for determining, based on it: the position of the bike (2), a depletion condition of the battery (17), the bike identification code, the automatic station (3) housing said bike (2) based on the position. The electronic remote control station (15) can send to the given automatic station (2) a coupling signal actuating the electromechanical component that locks the bike (2) in said automatic station (3).

## Description

The present patent application relates to a public electric bike sharing system provided with an automatic electronic system for remotely managing the electric supply for said public bikes and to the relative operating method.

In particular, the present invention relates to a public bike sharing system equipped with an electronic system that can remotely monitor the level/state of the electric charge of the electric batteries installed in the pedal-assisted bikes, to which the following description will make explicit reference without thereby losing its generality. As already known, in recent years there has been a wide diffusion, especially in large towns, of public bike sharing services.

The bike sharing service is essentially based on the idea of providing bike stations in different points of the town and allowing a user to collect a bike from a bike station upon payment of the service, use it for a preset mileage/time based on the payment made and then return it in any bike station at the end of the use.

Generally, bike sharing systems offer the user the possibility to use two types of bikes: traditional "human" traction bikes and pedal-assisted "electric" traction bikes. Generally, pedal-assisted bikes have an electric battery that, in use, supplies electric power to the electric motor of the bike by means of electronic control units controlling the electric power supplied by the battery to the motor based on the user's commands.

In presently known bike sharing systems, the bike electric battery is recharged when the bike is parked in the bike station. For this purpose, the mechanical locking structure of the bikes in the bike station is provided with fixed electrical connectors that, in use, are coupled to corresponding connectors in the bike for coupling the electric batteries to a local electric power supply network provided in the bike station for recharging the bikes. Unfortunately, the presence of fixed electrical connectors in the mechanical locking structure of the bike station makes it unsuitable to house traditional (non-electric) bikes, unless significantly modifying the mechanical locking structure at the coupling points of the bikes. Furthermore, the maximum number of bikes which can be housed in the bike station is constrained by its maximum capacity of charging, which clearly depends on the maximum electric power which can be supplied to the electric power supply network of the bike station. Finally, the mechanical locking structure typically comprises metal frames formed by vertical uprights and/or horizontal bars, housing circuits, cables and electrical wirings that connect the local power supply network to the electrical connectors provided in the coupling points. The presence of electric elements in the metal frames is, however, particularly inconvenient, since it requires particularly complex and costly electric insulations, especially when the electric power of the supply network turns out to be relatively high.

US 2012 143 401 describes a bike sharing system comprising pedal-assisted electric traction bikes provided with batteries permanently mounted on the bikes. The system is configured for: comparing the charge levels of the batteries mounted on the bikes in a station, determining which bike has the battery with the highest charge level based on the comparison, and unlocking the identified bike so that the user can use it.

The aim of the present invention is therefore to provide a bike sharing system that allows overcoming the aforesaid technical problems.

This aim is achieved by the present invention in that it relates to a bike sharing system and method, according to what is defined in the appended claims.

The present invention will now be described with reference to the accompanying drawings showing a non-limiting embodiment, wherein:
- Figure 1 schematically shows a bike sharing system in accordance with the teaching of the present invention;
- Figure 2 schematically shows operating blocks of the battery supply monitoring system included in the bike sharing system in accordance with the teaching of the present invention.

The present invention will now be described in detail with reference to the accompanying drawings to allow a person skilled in the art to manufacture and use it. Various modifications to the described embodiments will be readily apparent to the persons skilled in the art, and the general principles described might be applied to other embodiments and applications without departing from the protective scope of the present invention, as defined in the appended claims. Therefore, the present invention should not be regarded as limited to the embodiments herein described and shown, but should be allowed the widest scope consistent with the principles and characteristics herein described and claimed.

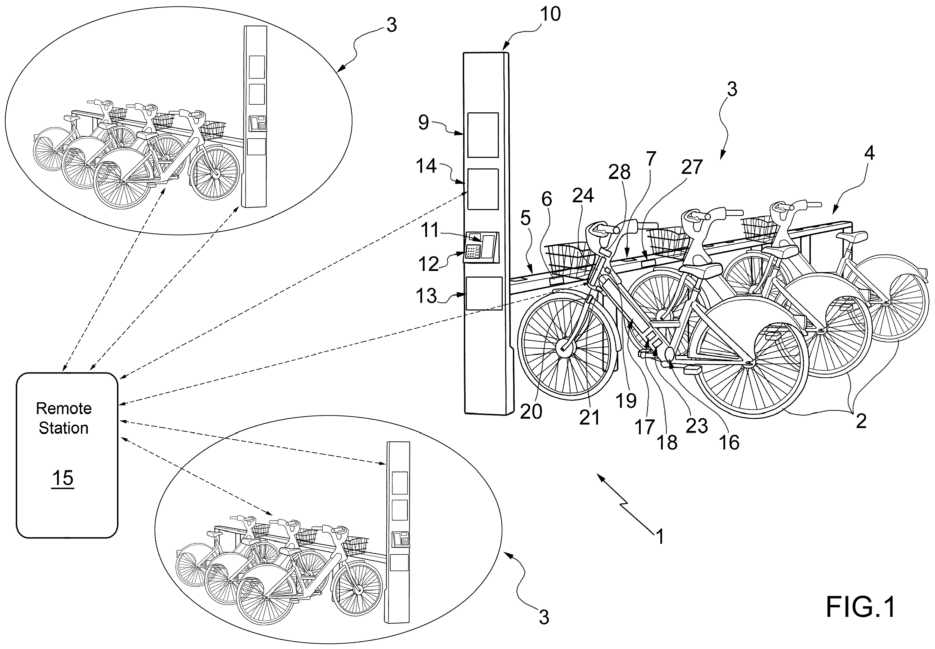

With reference to Figure 1, number 1 indicates as a whole a public bike sharing system, indicated hereinafter for clarity's sake, without thereby losing in generality, as bike sharing system. The bike sharing system 1 essentially comprises a plurality of bikes 2 and a plurality of automatic stations 3 for collecting and returning bikes 2 (only three of which are shown in Figure 1, purely by way of example and without thereby losing in generality), which can be provided in respective given areas of an inhabited centre. Each automatic station 3 is provided with a supporting and locking/unlocking structure 4 for automatically housing and locking/unlocking, on command, the bikes 2 in the automatic station 3.

According to a possible embodiment shown in Figure 1, the supporting and locking/unlocking structure 4 may preferably, though not necessarily, comprise at least one substantially tubular bar 5, for example a rectilinear metal section bar, which is supported in a horizontal position by a series of vertical uprights firmly fixed to the ground, and a plurality of electromechanical locking/unlocking devices 6 arranged in respective coupling points A mutually spaced along the bar 5, where the bikes 2 are parked in the automatic station 3.

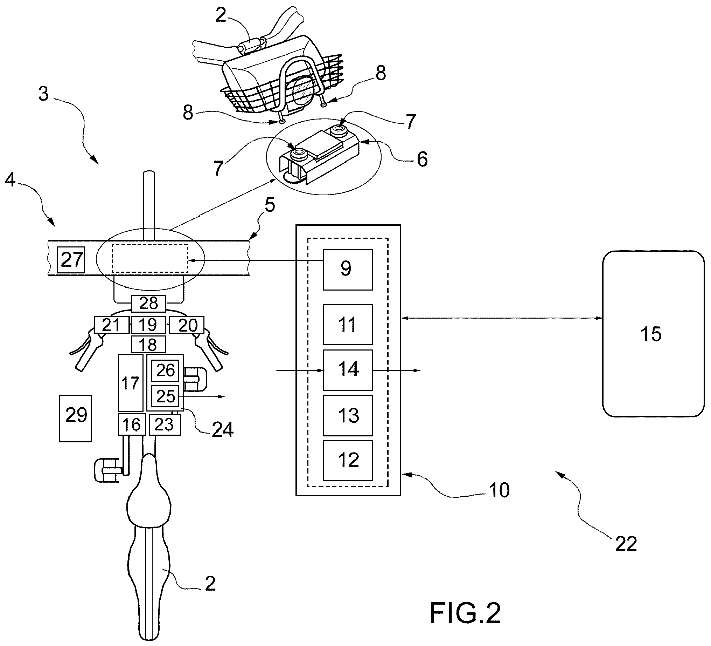

According to a possible exemplary embodiment shown in Figures 1 and 2, the electromechanical locking/unlocking devices 6 may comprise electrically motorised jaws (not shown), which are preferably housed within the bar 5 in correspondence of a pair of through holes 7 formed at the top of the bar 5 at the coupling points A. Preferably, the jaws can be operated in use through electromechanical elements, e.g. electrically controlled actuators or the like, to operate between a locking position, where the jaws are drawn nearer/closed to take a grip on fastening pins 8 of the bike 2 to fix them stably to the bar 5, and an unlocking position, where the jaws are removed/opened to release the fastening pins 8 and therefore allow the user to collect the bike 2 from the automatic station 3.

In the example shown in Figure 2, the fastening pins 8 have an elongated cylindrical shape, preferably projecting from the front part of the bike 2, for example from the front portion of the frame or from the frame of the basket downward, and are shaped so as to be engaged in the holes 7 in order to protrude between the jaws inside the bar 5.

The automatic stations 3 further comprise a local electronic control unit 9, which can selectively control the electromechanical locking/unlocking devices 6 to unlock/lock the bikes 2 at their coupling points A. According to a preferred embodiment, the electronic control unit 9 may comprise tabs and/or electronic modules housed in a box-like frame having the shape of a column or totem working as an interactive user interface electronic terminal 10. Preferably, the user interface electronic terminal 10 may comprise, for example, beside the local electronic control unit 9, a display 11, e.g. a screen or display for displaying user information associated with the offered bike sharing service, i.e. payment mode, position of the bike 2 in the station 3, etc., control devices 12, e.g. a keyboard or a touch-screen allowing the user to impart commands, for example to access information relating to the service or to proceed with the payment etc., and/or reading devices 13 for the automatic reading of user electronic cards, for example of microchip cards containing data associated to the bike sharing service, e.g. the service subscription.

Preferably, the user interface electronic terminal 10 may further comprise communication electronic devices 14, preferably but not necessarily operating in radiofrequency to transmit and receive data to/from an electronic remote control station 15. For example, the communication electronic devices 14 may include phone modules performing on command a two-way wireless communication through a GPRS or UMTS system or the like, for exchanging data between the local electronic control unit 9 and the electronic remote control station 15.

The electronic remote control station 15 is arranged in a remote position with respect to the electronic interface terminals 10 and may comprise, for example, one or more servers provided with a database and one or more processing apparatuses, for example personal computers cooperating with each other and with the server, for example through an intranet, and allowing the user to exchange data/information with the servers, for example through monitors, displays and keyboards.

With regard to the bikes 2, they comprise pedal-assisted electric bikes, each of which is provided with an electric motor 16 coupled in a known manner to a wheel of the bike 2 to rotate it, an electric battery 17, which is easily removably coupled to the frame of the bike 2 and can supply electric power to the electric motor 16, and an electronic control circuit 18, which is mounted on the bike 2 and is designed to control/adjust the electric power supplied to the electric motor 16. The frame of the bike 2 may be provided with a seat (not shown) for housing the battery 17. The seat can be designed to enable a user to manually insert the battery 17 in the seat and/or easily remove it to replace it with a new battery 17.

The bike 2 further comprises a transponder 19, preferably a (passive) RFID tag containing a bike code that uniquely identifies the bike 2 and, in use, can be identified by the local electronic control unit 9 through a reading carried out by the RFID code reading devices 27 preferably installed in the supporting and locking structure 4, for example at the coupling points A.

The bike 2 further preferably comprises a motion sensor device 20, e.g. at least one (bi-axial or tri-axial) accelerometer, which can generate a displacement signal indicating the occurred motion/displacement of the bike 2 with respect to a rest position in which the bike 2 is stationary/immovable. The bike 2 further preferably comprises a position sensor device 21, for example a GPS module, which can generate a position signal indicating the position of the bike 2 with respect to a given reference system.

The bike sharing system 1 further comprises an electronic monitoring system 22 (schematically shown in Figure 2), comprising for each bike 2: an electronic power meter circuit 23 installed in the bike 2, which is electrically connected to the battery 17 for measuring at least one of its electric parameters (voltage, current, power) and can supply, based on the measured electric parameter, a measurement signal indicating the electric charge level of the electric battery 17.

The electronic monitoring system 22 further comprises an electronic apparatus 24, which is configured for receiving the measurement signal from the electronic power meter circuit 23, receiving the displacement signal from the motion sensor device 20 and receiving the position signal from the position sensor device 21. The electronic apparatus 24 is further configured for processing the measurement signal to determine the electric charge level of the electric battery 17 and to determine a depletion condition of the battery 17 based on the detected electric charge level. The electronic apparatus 24 may also be configured for comparing the determined/measured charge level with a given stored threshold (power and/or voltage and/or current) for determining the depletion condition of the battery 17 based on the comparison results.

The electronic apparatus 24 may also be configured for detecting the position of the bike 2 based on the position signal and determining a condition of occurred displacement/motion based on the displacement signal.

The electronic apparatus 24 may further comprise an electronic calculating module 25 for determining the depletion condition (as previously stated), and an electronic communication form 26, e.g. a GPRS, UMTS phone module or the like, which can transmit, on command, to the electronic remote control station 15 a power supply state signal containing the following information/data: depletion condition of the battery 17, bike code, position of the bike 2. Preferably, the power supply state signal may be transmitted when the electronic apparatus 24 detects that the determined/measured charge level and the given threshold satisfy a given relationship, e.g. when the determined/measured charge level reaches a value equal to or lower than the given threshold. Preferably, additionally or alternatively, the power supply state signal can be transmitted by the electronic apparatus 24 in response to the occurred displacement/motion of the bike 2 detected through the device motion sensor 21.

The electronic remote control station 15 may be configured for receiving the power supply state signal, processing the power supply state signal to determine/detect the depletion condition of the battery 17, determining the bike code and determining the position of the bike 2. The power supply state signal can be directly transmitted by the electronic apparatus 24 to the electronic remote control station 15, or it can be indirectly transmitted, namely through/by the user interface electronic terminal 10 following a communication between this latter and the electronic apparatus 24.

The electronic remote control station 15 may be configured for automatically transmitting to the local control unit 9 of the automatic station 3 housing the bike 2 a coupling signal indicating a locking request of the bike 2 in the automatic station 3, once the battery depletion condition of the bike 2 has been determined. Preferably, once the battery depletion condition of the bike 2 has been received/determined, the electronic remote control station 15 automatically generates/provides, based on the received power supply state signal: an indication on the depletion of the battery 17, an indication on the position of the bike 2 carrying the depleted battery 17 and/or an indication on the position of the automatic station 3 housing the bike 2.

With regard to the local control unit 9, it may be configured for actuating the electromechanical locking device 6 in response of the received coupling signal, for closing the jaws and locking the bike 2 in the coupling point A of the automatic station 3. This advantageously avoids, on the one hand, that the user collects a bike 2 having an electric autonomy insufficient for the required route, and on the other hand it allows optimizing the times and costs of the battery replacement carried out by a maintenance technician. Preferably, the electronic remote control station 15 may be configured for providing to an operator indications relating to the depletion condition of the battery 17, the position of the bike 2 carrying the depleted battery and/or the position of the automatic station 3 housing the bike 2. The information communication to the operator may be performed through a display and/or by preset voice messages, through an audio synthesizer. In this way, the operator can conveniently intervene to replace the battery 17 even during the use of the bike.

Preferably, the electronic remote control station 15 may comprise a bike database containing, for each bike, a series of information indicating the operating state of the bike 2 and/or the state of maintenance of the bike 2, and/or the real position of the bike 2 and/or the automatic station housing the bike 2. According to a possible embodiment, the bike database can contain the bike codes and for each bike code: an indication on the battery depletion condition and the indications listed above, i.e. an indication on the bike position and an indication on the station housing the bike. This conveniently allows monitoring in real time the power supply condition of the battery in each bike and rapidly sending a maintenance technician to the given station to replace the depleted battery in the bike 2.

The present invention is not limited to the automatic locking of the bikes 2 parked in the automatic station 3 in case of depleted batteries and to the remote reporting of the battery depleted condition to send a maintenance technician to the station housing the bike 2, but may provide other alternative or additional solutions to the one previously described. For example, while using the bike 2, the electronic apparatus 24 can repeatedly monitor/sample the charge level of the battery 17 and determine if the measured charge level has reached a value insufficient to allow the user to complete a given route. Preferably, if the determined level of electric charge is insufficient, the electronic apparatus 24 sends the measured charge level and its position to the electronic remote control station 15. The electronic remote control station 15 determines, based on the charge level and on the effective position of the bike 2, which automatic stations 3 are present within the area of residual autonomy of the electric traction of the bike 2 and provides to the electronic apparatus 24 of the bike 2 a series of information displayed through a control panel 28 relating to the identified automatic stations 3.

In addition or as an alternative, if the charge level becomes insufficient, the electronic apparatus 7 can transmit the power supply state signal to the remote control station 15 and generates a warning signal asking the user to temporarily stop in order to allow a convenient intervention for the replacement of the battery 17. The signals sent to the user by the electronic apparatus 24 can be sent through the control panel 28 mounted on the bike 2 and/or through a portable user communication device 29, for example a smartphone or a mobile phone. For example, the electronic apparatus 24 may be provided with a Bluetooth short-range communication system that connects the electronic apparatus 24 to the user communication device 29. In addition or alternatively, the signals can be sent through the user portable communication device 29 via an SMS message or a message generated/transmitted through a smartphone application, such as for example, WhatsApp™ or the like.

The aforesaid system eliminates the need to employ structures provided with electrical connectors for recharging the batteries. The elimination of the connectors advantageously allows using universal locking structures, i.e. structures that can house both electric and traditional bikes.

Moreover, the remote signalling of the battery depletion condition allows a prompt intervention for their replacement, thereby strongly reducing the bike downtime required by known systems locally recharging the battery in the automatic station.

Moreover, a technical effect of the aforesaid solution is nullifying the risk to give a user a bike having a battery with an insufficient charge, with all the related drawbacks for the user. In fact, the system locks beforehand the bike at the station when its charge level is lower than a given threshold, regardless of the number of bikes available in the station and/or of the charge level of the batteries of the remaining bikes. On the contrary, the system disclosed in US 2012 143 401 allows the collection of the bike having the highest battery charge level in the station. Therefore, this system has two critical conditions that have been solved by the system object of the present invention. The first critical condition occurs when in the automatic station there is a single bike having a depleted battery, while the second critical condition occurs when all bikes have a depleted battery. In both cases, the system disclosed in US 2012 143 401 unlocks a bike to give it to the user despite the battery depletion condition. The system object of the present invention solves this technical problem since it detects the battery state of the selected bike and, in case of depletion, locks beforehand the bike in the station.

## Claims

1. Bike sharing system (1) comprising:
- a plurality of pedal-assisted electric bikes (2), each of which comprises an electric motor (16) rotating at least one wheel of the bike (2) and at least one electric battery (17), which is stably but easily removably coupled to the frame of the bike (2) so as to be easily removed and replaced, and supplies an electric power supply to said electric motor (16);
- a plurality of automatic stations (3) for collecting and returning bikes, each of which has a plurality of coupling points (A) for the bikes (2) and a mechanical supporting and locking structure (4) for coupling, based on a coupling signal, said electric bikes at said coupling points (A);
- said bike sharing system (1) being **characterised in that** it comprises a monitoring system (22) of the power supply state of the bikes, which comprises electronic control means (24) (19) (20) (21) installed in the bikes (2), each of which is configured for: storing an identification code of the bike (2), determining the position of the bike (2), measuring at least one electric parameter of the battery (17) indicating the charge level of the battery (17), determining a depletion condition of the battery (17) based on the comparison between the determined/measured charge level and a given threshold, and transmitting a power supply state signal comprising said stored identification code, the determined position and said battery depletion condition;
said monitoring system (22) further comprises an electronic remote control station (15) configured for:
receiving and processing said power supply state signal for determining the position of the bike (2), detecting the depletion condition of the battery (17), determining said identification code of the bike (2) and determining the automatic station (3) housing said bike (2) based on said position,
said electronic remote control station (15) being further configured for transmitting, once the battery depletion condition of said bike (2) has been determined, the coupling signal to said given automatic station (3) to operate said mechanical supporting and locking structure (4) in order to lock the determined bike (2) in said automatic station (3).

2. System according to claim 1, wherein said automatic station (3) comprises a local electronic control unit (9), which selectively controls the mechanical supporting and locking structure (4) so as to selectively unlock/lock the bikes (2) at the relative coupling points (A); said electronic remote control station (15) being configured for automatically transmitting, once said battery depletion condition of the bike (2) has been determined, to the local control unit (9) of said automatic station (3) housing said bike (2), a coupling signal indicating a locking request of the bike (2) in the automatic station (3).

3. System according to claim 1, wherein once said battery depletion condition of the bike (2) has been determined, the electronic remote control station (15) automatically generates/provides, based on the received power supply state signal: an indication on the depletion of the battery (17) and an indication on the position of the bike (2) carrying the depleted battery (17).

4. System according to claim 1, wherein the electronic remote control station (15) is configured for communicating to an operator the indication relating to the depletion condition of the battery (17), the position of the bike (2) carrying the depleted battery and/or the position of the automatic station (3) housing the bike (2).

5. System according to claim 4, wherein the information communication to the operator occurs through a display and/or by preset voice messages, through an audio synthesizer.

6. System according to claim 1, wherein said electronic control means (24) repeatedly monitor/sample the charge level of the battery (17) and determine whether the measured charge level has reached a value that is insufficient to allow the user to complete a given route.

7. System according to claim 1, wherein the electronic remote control station (15) determines, based on the charge level and on the real position of the bike (2), the automatic station/s (3) within a residual autonomy area of the electric traction of the bike (2) and communicates to the electronic control means (24) of the bike (2) a series of information, displayed through a control panel (28), relating to the detected automatic stations (3).

8. System according to claim 1, wherein if the charge level becomes insufficient, the electronic control means (24) transmit the power supply state signal to the electronic remote control station (15) and generate a warning signal asking the user to temporarily stop to allow a convenient replacement of the battery (17).

9. System according to claim 8, wherein the signalling to the user performed by the electronic control means (24), is carried out via a control panel (28) placed on the bike (2) and/or through a portable user communication device (29).

10. System according to claims 8 or 9, wherein the signalling to the user is performed on a portable user communication device (29) via an SMS message or a message generated/transmitted through a smartphone application.

11. Operating method of a bike sharing system (1) comprising:
- a plurality of pedal-assisted electric bikes (2) each of which comprises an electric motor (16) rotating at least one wheel of the bike (2), and at least one electric battery (17), which is stably but easily removably coupled to the frame of the bike (2) so as to be easily removed and replaced, and supplies an electric power supply to said electric motor (16);
- a plurality of automatic stations (3) for collecting and returning bikes, each of which has a plurality of coupling points (A) of the bikes (2) and a mechanical supporting and locking structure (4) designed to couple said electric bikes at said coupling points (A), based on a coupling signal;
said method being **characterised in that** it comprises the steps of:
- storing identification codes of the bikes (2) by means of electronic control means (24) (19) (20) (21) installed in the bikes (2),
- determining the position of the bikes (2) by means of said electronic control means (24) (19) (20) (21),
- measuring through said electronic control means (24) (19) (20) (21) at least one electric parameter of the battery (17) indicating the charge level of the batteries (17),
- determining through said electronic control means (24) (19) (20) (21) a depletion condition of the battery (17) based on a comparison between the charge level determined/measured by said electronic control means (24) (19) (20) (21) and a given threshold, and
- once the battery depletion condition of said bike (2) has been determined, transmitting by means of said electronic control means (24) (19) (20) (21) a power supply state signal comprising said stored identification code, the given position and a parameter indicating the level of electric charge;
- receiving through an electronic remote control station (15) said power supply state signal;
- determining by means of said electronic remote control station (15) the position of the bike (2), the depletion condition of the battery (17) and said identification code of the bike (2), based on said power supply state signal,
- determining by means of said electronic remote control station (15) the automatic station (3) housing said bike (2) based on said position,
- transmitting to said given automatic station (3) by means of said electronic remote control station (15) said coupling signal to actuate said mechanical supporting and locking structure (4) so as to lock said bike (2) in the automatic station (3).

12. Method according to claim 11, wherein said automatic station (3) for collecting and returning bikes comprises a local electronic control unit (9), which controls the mechanical supporting and locking structure (4) so as to unlock/lock selectively the bikes (2) at the relative coupling points (A);
wherein said method comprises the step of automatically transmitting through said electronic remote control station (15), once said battery depletion condition of the bike (2) has been determined, to the local control unit (9) of said automatic station (3) housing the bike (2), said coupling signal indicating a locking request of the bike (2) in the automatic station (3).

13. Method according to claim 11, wherein once said battery depletion condition of the bike (2) has been received/determined, the electronic remote control station (15) automatically generates/provides, based on the received power supply state signal: an indication on the depletion of the battery (17), an indication on the position of the bike (2) having the depleted battery (17) and/or an indication on the position of the automatic station (3) housing the bike (2).

14. Method according to claim 11, comprising the step of communicating to an operator through said electronic remote control station (15) an indication relating to the depletion condition of the battery (17), the position of the bike (2) having the depleted battery and/or the position of the automatic station (3) housing the bike (2).

15. Method according to claim 14, wherein the information communication to the operator is performed through a display and/or by preset voice messages, through an audio synthesizer.
